# EUROPÄISCHE PATENTSCHRIFT

(11) **EP 2 627 917 B1**
(45) Veröffentlichungstag und Bekanntmachung des Hinweises auf die Patenterteilung: **20.07.2016**
(21) Anmeldenummer: 11757821.1
(22) Anmeldetag: 08.09.2011
(51) Int. Cl.: F16B 13/00, E04F 13/08, F16B 39/282, E04B 1/76

(54) **BEFESTIGER**
FASTENER
DISPOSITIF DE FIXATION

(30) Priorität: 14.10.2010 DE 102010048537
(43) Veröffentlichungstag der Anmeldung: 21.08.2013
(73) Patentinhaber: SFS Intec Holding AG, 9435 Heerbrugg (CH)
(72) Erfinder: HULTGREN, Joakim, S-725 97 Västerås (SE); KORHONEN, Tero, S-725 92 Västerås (SE)
(74) Vertreter: Schumacher & Willsau
(86) Internationale Anmeldenummer: PCT/EP2011/065552
(87) Internationale Veröffentlichungsnummer: WO 2012/048964

(56) Entgegenhaltungen:
- EP-A1- 1 541 881
- DE-U1- 8 513 794
- DE-U1- 9 107 838
- DE-U1- 20 103 427
- DE-U1-202008 003 690
- JP-A- 9 269 003
- JP-U- 54 098 955
- US-A- 5 217 339

## Beschreibung

Die Erfindung betrifft einen Befestiger mit einem Schaft, mit einem scheibenförmigen Kopf, der mit dem Schaft drehfest verbindbar oder verbunden ist und an einer Unterseite mit sich jeweils von einer Anschlussstelle an dem Schaft aus insgesamt von innen nach außen erstreckenden Schneiden versehen ist, und mit einer dem Schaft und/oder dem Kopf zugeordneten Drehmitnahme zum Setzen des Befestigers.

Ein ähnlicher Befestiger ist aus dem Dokument DE 81 12 335 U1 bekannt. Der bekannte Befestiger dient zur Befestigung von relativ schweren Gegenständen an Wänden aus Leichtbaustoffen mit einem Gewindebolzen und zwei im Bereich der Enden des Gewindebolzens aufschraubbaren, das Gewicht der Gegenstände aufnehmenden Lagerstücken, deren einander zugewandte Seiten mit Schneiden versehen sind, wobei das dem zu befestigenden Gegenstand benachbarte Lagerstück topfförmig und das am anderen Ende angeordnete Lagerstück scheibenförmig ist. Das scheibenförmige Lagerstück hat nicht nur die Funktion einer Mutter und einer Unterlegscheibe, sondern auch die eines Fräsers, da es mit Schneidlappen versehen ist, mit deren Hilfe in der Befestigungswand eine Vertiefung eingefräst werden kann. Dazu wird das scheibenförmige Lagerstück über ein Gewinde einer Gewindebuchse mit dem Mitnehmerelement einer Bohrmaschine verbunden. Die Lagerstücke bestehen vorzugsweise aus Metall. An dem scheibenförmigen Lagerstück sind die Schneidlappen durch Einbiegen des Bleches gebildet und erstrecken sich im Wesentlichen in radialer Richtung. Dadurch sind Schlitze gebildet, durch die Fräsgut von unterhalb des scheibenförmigen Lagerstückes aus beim Setzvorgang nach oben gefördert werden kann. Die Leichtbaustoffwand besteht vorzugsweise aus Gasbeton, einer Gipsplatte oder einem sonstigen Leichtbaustoff. Wenn der bekannte Befestiger in hartem Dämmstoff verwendet werden würde, z. B. um den Dämmstoff auf einer Wand zu befestigen, so würde das hinter den Schneiden aus den Schlitzen austretende staubförmige Fräsgut zu Verunreinigungsproblemen und zur Gefährdung der Gesundheit des eingesetzten technischen Personals führen.

Es sind zwar bereits speziell zur Befestigung von Dämmstoffplatten geeignete Dübel und Verfahren zur Montage entwickelt worden, mit diesen lassen sich die vorstehenden Probleme aber nur durch Inkaufnahme von anderen Problemen lösen. So zeigt z. B das Dokument DE 101 59 632 A1 einen Dübel und ein Verfahren zur Montage von Dämmstoffplatten, bei dem der Dübel mit Schneidvorrichtungen an der Unterseite eines Drucktellers versehen ist, der beim Setzen des Dübels in Rotation versetzt wird. Die Schneidvorrichtungen sind aber nur am Umfang des Drucktellers vorgesehen, sie schneiden also nur außen, so dass der Dämmstoff an der Unterseite des Drucktellers komprimiert werden muss, wenn der Dübel in der Dämmstoffplatte versenkt werden soll.

Aus dem Dokument EP 0 921 251 B1 sind Dämmstoffhalter bekannt, die zum Setzen in Rotation versetzt werden. Die Rotation wird aber abgeschaltet, sobald der Teller auf einer den Dämmstoff bedeckenden Dachbahn aus Bitumen od. dgl. aufsitzt. Ein zum Setzen verwendeter Schraubendreher hat eine Ausrückeinrichtung, die die drehfeste Verbindung des Dämmstoffhalters mit dem Schraubendreher rechtzeitig löst. Die Rotation des Dämmstoffhalters endet dadurch spätestens, wenn der Dämmstoffhalteteller auf einem Untergrund aufsitzt. Ein solcher Dämmstoffhalter kann also nicht so gesetzt werden, dass der Dämmstoffhalteteller nach dem Setzen in dem Dämmstoff versenkt ist.

Weiter sind Befestigungselemente für die Befestigung von wärme- und schallisolierenden Materialen oder für Isolierplatten aus den Dokumenten EP 0 074 469 A1 bzw. DE 195 00 064 A1 bekannt. Diese Befestigungselemente werden jedoch lediglich eingetrieben, also zum Setzen nicht in Rotation versetzt. Sie sind daher nur bei Dämmstoffen od. dgl. einsetzbar, die ein Versenken des Dämmstoffhalttellers durch Eintreiben gestatten, also beispielsweise weich genug sind.

Ein Befestiger, der dem Befestiger nach dem Oberbegriff des Patentanspruchs 1 ähnlich ist, ist aus dem Dokument JP 9 269003 A bekannt. Bei dem bekannten Befestiger handelt es sich nicht um einen Befestiger mit einem scheibenförmigen Kopf, sondern um eine Mutter, die einen zylindrischen Teil mit einem am oberen Ende angeformten Flansch aufweist, der an der Unterseite konisch ausgebildet und mit Schneidkanten versehen ist zum Versenken des Flansches in einer Schwelle aus Holz, die auf einem Betonfundament zu befestigen ist. Damit die Mutter mit dem Flansch problemlos in der Holzschwelle versenkt werden kann, sind die Schneidkanten entgegen der Drehrichtung von einem Radius durch ihre Anschlussstelle an dem zylindrischen Teil weg gekrümmt. Dadurch wird das Schneid- oder Fräsgut aus der Senkbohrung, die die Mutter schneidet, nach außen gefördert, um für den Flansch der Mutter Platz zu schaffen. Umwelt- oder Gesundheitsprobleme sind nicht zu befürchten, weil es sich bei dem Schneid- oder Fräsgut um Holzspäne handelt.

Aus dem Dokument DE 91 07 838 U ist ein Befestiger bekannt, der dem Befestiger nach dem Oberbegriff des Patentanspruchs 1 ähnlich ist. Bei dem bekannten Befestiger handelt es sich um eine Schraube mit versenkbarem Kopf, die bei der Trockenverglasung im Fensterbau eingesetzt wird und zum Befestigen von Fensterglasleisten bestimmt ist. Es handelt sich um eine selbstbohrende oder selbstfurchende Schraube, die ohne Vorbohren in Fensterleisten eingeschraubt werden kann, ohne dass diese dabei aufspringen oder reißen. Die Unterseite des Schraubenkopfes weist ellipsenförmige oder ovale Taschen auf, deren Randkanten als scharfe Schneid- oder Fräskanten ausgebildet sind. Das durch die Schneid- oder Fräskanten abgetragene Fräsmaterial wird in den Frästaschen abgelagert und dort verdichtet.

Aufgabe der Erfindung ist es, einen Befestiger der eingangs genannten Art so auszubilden, dass sich die oben geschilderten Nachteile des Standes der Technik vermeiden lassen.

Zur Lösung dieser Aufgabe ist ein Befestiger der eingangs genannten Art dadurch gekennzeichnet, dass die Schneiden von ihrer Anschlussstelle aus nach außen hin betrachtet bei einem Setzvorgang von einem Radius in Drehrichtung weg geneigte oder gekrümmte Fräsrippen sind, die bei einem Setzvorgang anfallendes Fräsgut zwischen den Fräsrippen nach innen zum Zentrum des scheibenförmigen Kopfes fördern, so dass Umwelt- oder Gesundheitsprobleme durch austretendes staubförmiges Fräsgut vermieden werden.

Vorteilhafte Ausgestaltungen des Befestigers nach der Erfindung bilden die Gegenstände der abhängigen Ansprüche.

In einer Ausgestaltung des Befestigers nach der Erfindung erstreckt sich wenigstens eine sacklochartig ausgebildete Öffnung von der Unterseite aus zwischen den Fräsrippen zur Fräsgutaufnahme in den Kopf. Das Fräsgut wird so in der sacklochartig ausgebildeten Öffnung aufgenommen, wodurch das Austreten von staubförmigem Fräsgut während des Setzvorganges noch sicherer vermieden wird.

In einer weiteren Ausgestaltung des Befestigers nach der Erfindung schließen die Fräsrippen jeweils mit einem inneren Ende außen mit Abstand oder unmittelbar an den Schaft oder an eine der Öffnungen, die zentral angeordnet ist, an. Dadurch ist gewährleistet, dass das Fräsgut im Wesentlichen vollständig ins Zentrum bzw. in die zentrale Öffnung gefördert wird.

In einer weiteren Ausgestaltung des Befestigers nach der Erfindung ist jeweils mindestens eine der Öffnungen in radialem Abstand von einer Mittelachse des Befestigers zwischen zwei in Umfangsrichtung benachbarten Fräsrippen angeordnet. Dadurch ist zwischen jeweils zwei benachbarten Fräsrippen eine Öffnung zur Aufnahme von staubförmigem Fräsgut vorhanden und somit dessen Austritt nach außen während des Setzvorganges nicht möglich. Diese Ausgestaltung kann zusätzlich mit der zentralen Öffnung eingesetzt werden, so dass staubförmiges Fräsgut, das von der Öffnung jeweils zwischen zwei benachbarten Fräsrippen nicht aufgenommen wird oder aufgenommen werden kann, mit Sicherheit dann von der zentralen Öffnung aufgenommen wird.

In einer weiteren Ausgestaltung des Befestigers nach der Erfindung nimmt (nehmen) die Öffnung(en) 20 Prozent der Fläche der Unterseite des Kopfes ein. Diese Dimensionierung gewährleistet eine sichere Aufnahme von bei dem Setzvorgang anfallendem Fräsgut in den sacklochartig ausgebildeten Öffnungen.

In einer weiteren Ausgestaltung des Befestigers nach der Erfindung ist die Drehmitnahme ein sich in den Kopf erstreckendes, im Querschnitt unrundes Loch zur formschlüssigen Aufnahme eines Mitnehmerelements eines Drehantriebswerkzeuges. Diese Ausgestaltung gewährleistet, dass jede handelsübliche Bohrmaschine oder jeder handelsübliche Schraubendreher zum Setzen des Befestigers verwendet werden kann.

In einer weiteren Ausgestaltung des Befestigers nach der Erfindung sind die Schneiden in Drehrichtung konkav gekrümmte Fräsrippen. Das verstärkt die Tendenz, staubförmiges Fräsgut in Richtung Zentrum zu fördern.

Ausführungsbeispiele der Erfindung werden im Folgenden unter Bezugnahme auf die Zeichnungen näher beschrieben. Es zeigt:
- Fig. 1: eine erste Ausführungsform eines Befestigers nach der Erfindung in einer Längsschnittansicht nach der Linie I-I in Fig. 3,
- Fig. 2: den Befestiger nach Fig. 1 in Draufsicht,
- Fig. 3: den Befestiger nach Fig. 1 in einer Unteransicht,
- Fig. 4: eine zweite Ausführungsform des Befestigers nach der Erfindung in einer Längsschnittansicht nach der Linie IV-IV in Fig. 6,
- Fig. 5: den Befestiger nach Fig. 4 in Draufsicht,
- Fig. 6: den Befestiger nach Fig. 4 in einer Unteransicht,
- Fig. 7: eine dritte Ausführungsform des Befestigers nach der Erfindung in einer Längsschnittansicht nach der Linie VII-VII in Fig. 9,
- Fig. 8: den Befestiger nach Fig. 7 in Draufsicht und
- Fig. 9: den Befestiger nach Fig. 7 in einer Unteransicht.

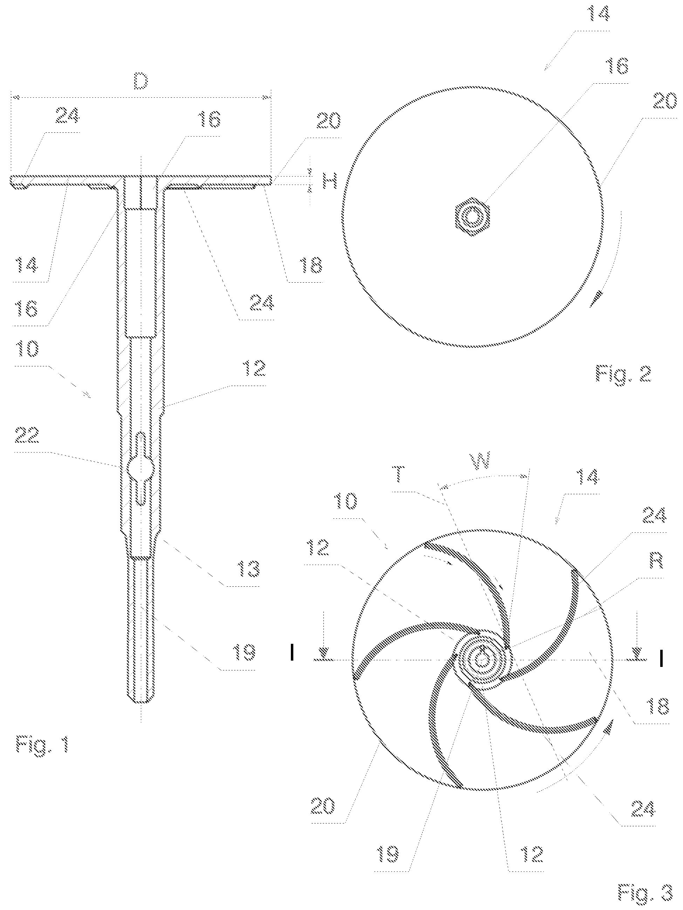

In Fig. 1 ist eine erste Ausführungsform eines Befestigers nach der Erfindung in einer Längsschnittansicht nach der Linie I-I in Fig. 3 gezeigt und insgesamt mit 10 bezeichnet. Der Befestiger 10 hat einen Schaft 12 und einen Kopf 14, die in der hier dargestellten ersten Ausführungsform einstückig ausgebildet sind. Der gesamte Befestiger 10 ist wie ein üblicher Dübel hergestellt, z.B. als ein Spritzgießteil aus Kunststoff. Die Ausbildung könnte auch so getroffen sein, dass der Kopf 14 mit dem Schaft 12 drehfest verbindbar ist, z. B. mit Hilfe einer Gewindebohrung in dem Kopf 14, in die ein mit Gewinde versehenes oberes Ende des Schafts 12 eingeschraubt ist (nicht dargestellt). In einer in Fig. 2 dargestellten Draufsicht auf den Kopf 14 ist eine Drehmitnahme 16 zu erkennen, die hier als ein sich in den Kopf 14 und in den oberen Teil des Schaftes 12 erstreckendes, im Querschnitt unrundes Loch zur formschlüssigen Aufnahme eines nicht dargestellten Mitnehmerelements eines Drehantriebswerkzeuges ausgebildet ist. Der Kopf 14 hat einen Durchmesser D und eine Dicke H. Der Schaft 12 hat unten eine Schulter 13. Der Schaft 12 hat oberhalb der Schulter 13 ein Längenkompensationselement 22. Das Längenkompensationselement 22 bildet in dem Befestiger 10 eine Art Knautschzone. Wenn der Schaft 12 mit seiner Schulter 13 auf dem oberen Rand einer Bohrung aufsitzt, kann eine Befestigungsschraube, die in dem Befestiger 10 eingeführt ist, trotzdem weiter eingeschraubt und der Kopf 14 somit näher an den Untergrund gebracht werden, weil sich der Schaft 12 im Bereich des Längenkompensationselements 22 auffaltet.

Der Befestiger 10 ist an der Unterseite 18 mit sich jeweils insgesamt von innen zur Kopfaußenseite 20 hin erstreckenden Schneiden versehen, die in den in den Zeichnungen dargestellten Ausführungsbeispielen als in Drehrichtung von einem Radius weg konkav gekrümmte Fräsrippen 24 ausgebildet sind. Die Fräsrippen 24 könnten stattdessen einfach in Drehrichtung von einem Radius weg geneigte gerade Fräsrippen sein. Die Fräsrippen 24 schließen jeweils mit einem inneren Ende außen an den Schaft 12 an und erstrecken sich von da aus jeweils bis zur Kopfaußenseite 20. Sie könnten stattdessen auch mit Abstand an den Schaft 12 anschließen. Zum Setzen des Befestigers 10 wird dieser im Uhrzeigersinn in Rotation versetzt, wenn der Befestiger 10 in der Draufsicht in Fig. 2 betrachtet wird. Die Drehrichtung ist dort durch einen Pfeil angedeutet. In der in Fig. 3 gezeigten Unteransicht ist der Drehrichtungspfeil entgegengesetzt gerichtet. Der Schaft 12 bildet eine Nabe, von der aus sich jede Fräsrippe 24 unter einem Winkel W von weniger als 90° gegen eine gedachte Tangente T an den Schaft 12 nach außen erstreckt. Jede Fräsrippe 24 krümmt sich bei den hier dargestellten Ausführungsbeispielen von einem Radius R durch die Anschlussstelle in Drehrichtung zunehmend nach innen zum Schaft 12 hin, so dass jede Fräsrippe 24 schließlich in Drehrichtung konkav gekrümmt ist, wie es in Fig. 3 zu erkennen ist. Jeweils zwei in Umfangsrichtung benachbarte Fräsrippen 24 bilden so einen sich von außen nach innen zum Schaft 12 hin verengenden Raum, in welchem durch die Fräsrippen 24 von einer Dämmstoffplatte od. dgl. abgetragenes staubförmiges Fräsgut nach innen zu einer Mittelachse 19 des Schaftes 12 hin gefördert wird, wie es in Fig. 3 durch kleine Pfeile angedeutet ist.

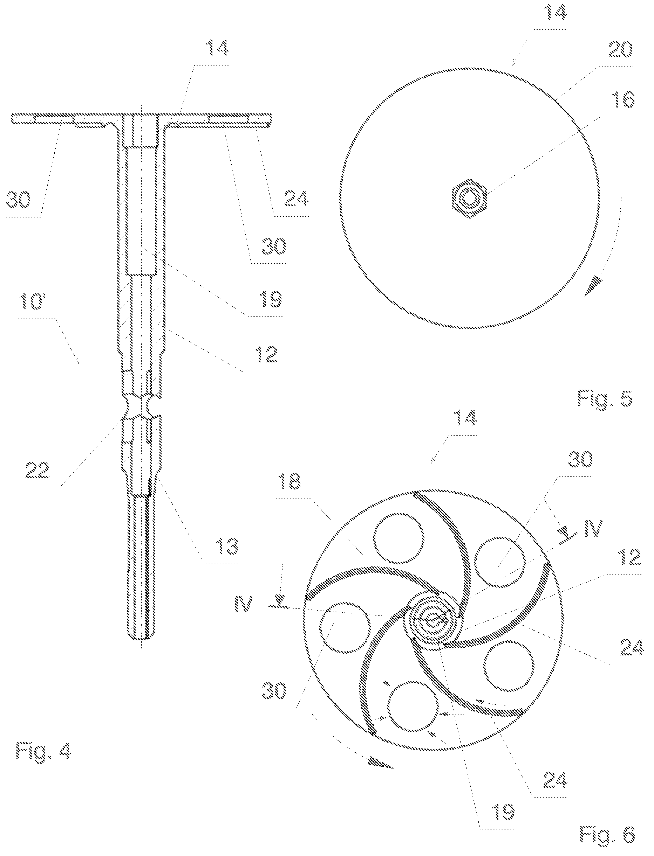

Die Fig. 4-6 zeigen in einer Längsschnittansicht nach der Linie IV-IV in Fig. 6, in Draufsicht bzw. in einer Unteransicht eine zweite Ausführungsform des Befestigers nach der Erfindung, die insgesamt mit 10' bezeichnet ist. Im Übrigen sind gleiche Teile wie bei dem Befestiger 10 mit gleichen Bezugszeichen versehen. Der Befestiger 10' unterscheidet sich von dem Befestiger 10 im Wesentlichen dadurch, dass sich jeweils zwischen zwei in Umfangsrichtung benachbarten Fräsrippen 24 eine sacklochartig ausgebildete Öffnung 30 von der Unterseite 18 aus in den Kopf 16 erstreckt. Auf diese Weise hat der Kopf 14 fünf Öffnungen 30, die in der Unteransicht in Fig. 6 zu erkennen sind. Zwei der Öffnungen 30 sind in der Schnittansicht in Fig. 4 zu erkennen. Bei dem Setzen des Befestigers 10' fräsen die Fräsrippen 24 ein Loch in den Dämmstoff od. dgl., um den Kopf 14 darin zu versenken. Staubförmiges Fräsgut, das während des Setzvorganges gebildet wird, wird durch die Fräsrippen 24 nach innen in Richtung zu der Mittelachse 19 des Schaftes 12 gefördert. Dieses staubförmige Fräsgut wird von den Öffnungen 30 aufgenommen.

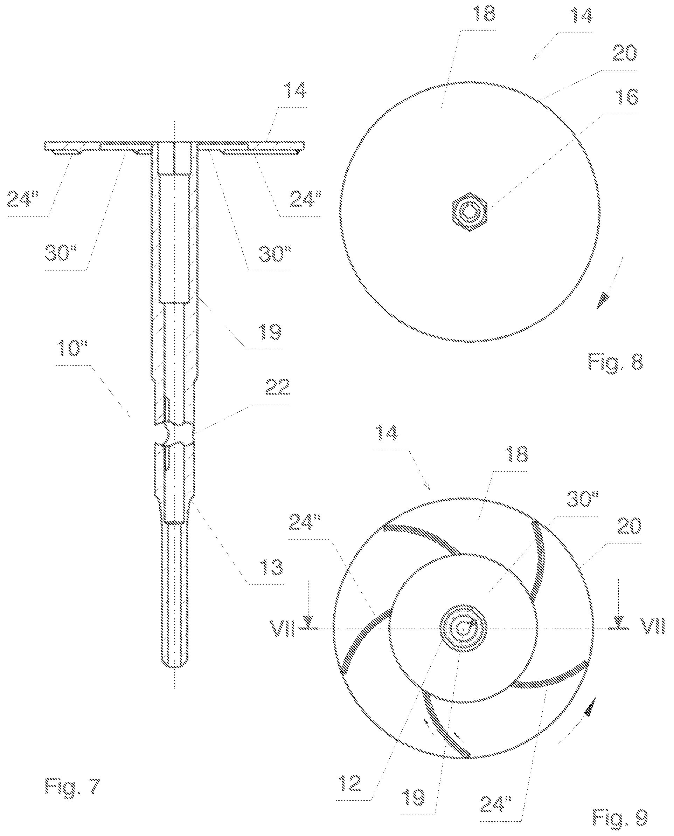

Die Fig. 7-9 zeigen eine dritte Ausführungsform des Befestigers nach der Erfindung in einer Längsschnittansicht nach der Linie VII-VII in Fig. 9, in Draufsicht bzw. in einer Unteransicht. Der Befestiger ist insgesamt mit 10" bezeichnet. Der Befestiger 10" unterscheidet sich von dem Befestiger 10' nach den Fig. 4-6 hauptsächlich dadurch, dass statt mehrerer sacklochartig ausgebildeter Öffnungen 30, die sich von der Unterseite 18 aus zwischen den Fräsrippen 24 zur Fräsgutaufnahme in den Kopf 14 erstrecken, nur eine wesentlich größere Öffnung 30" vorhanden ist, die zentral um die Mittelachse 19 angeordnet ist. Die bei dieser Ausführungsform mit 24" bezeichneten Fräsrippen erstrecken sich jeweils von dem Rand der zentralen Öffnung 30" aus gekrümmt nach außen zu der Außenseite 20 des Kopfes 14. Die Fräsrippen 24" könnten stattdessen auch in Drehrichtung von einem Radius weg geneigte gerade Fräsrippen sein. Während des Setzvorganges fördern jeweils zwei in Umfangsrichtung benachbarte Fräsrippen 24" in dem von ihnen begrenzten Raum bei dem Setzvorgang entstehendes staubförmiges Fräsgut einwärts in Richtung der Mittelachse 19 in die zentrale Öffnung 30". Bei der Ausführungsform nach den Fig. 4-6 nehmen die Öffnungen 30 mindestens 20 % der Fläche der Unterseite 18 des Kopfes 14 ein. Bei der Ausführungsform nach den Fig. 7-9 nimmt die eine zentrale Öffnung 30" mindestens 20 % der Fläche der Unterseite 18 des Kopfes 14 ein.

### Bezugszeichenliste

- 10: Befestiger
- 10': Befestiger
- 10": Befestiger
- 12: Schaft
- 13: Schulter
- 14: Kopf
- 16: Drehmitnahme
- 18: Unterseite
- 19: Mittelachse
- 20: Kopfaußenseite
- 22: Längenkompensationselement
- 24: Fräsrippe
- 24": Fräsrippe
- 30: Öffnung
- 30": Öffnung

- D: Durchmesser
- H: Dicke
- R: Radius
- T: Tangente
- W: Winkel

## Patentansprüche

1. Befestiger mit einem Schaft (12), mit einem scheibenförmigen Kopf (14), der mit dem Schaft (12) drehfest verbindbar oder verbunden ist und an einer Unterseite (18) mit sich jeweils von einer Anschlussstelle an dem Schaft (12) aus insgesamt von innen nach außen erstreckenden Schneiden versehen ist, und mit einer dem Schaft (12) und/oder dem Kopf (14) zugeordneten Drehmitnahme (16) zum Setzen des Befestigers (10, 10', 10"), **dadurch gekennzeichnet, dass** die Schneiden von ihrer Anschlussstelle aus nach außen hin betrachtet bei einem Setzvorgang von einem Radius (R) in Drehrichtung weg geneigte oder gekrümmte Fräsrippen (24, 24") sind, die bei einem Setzvorgang anfallendes Fräsgut zwischen den Fräsrippen (24, 24") nach innen zum Zentrum des scheibenförmigen Kopfes (14) fördern.

2. Befestiger nach Anspruch 1, **dadurch gekennzeichnet, dass** sich wenigstens eine sacklochartig ausgebildete Öffnung (30, 30") von der Unterseite (18) aus zwischen den Fräsrippen (24, 24") zur Fräsgutaufnahme in den Kopf (14) erstreckt.

3. Befestiger nach Anspruch 2, **dadurch gekennzeichnet, dass** die Fräsrippen (24) jeweils mit einem inneren Ende außen mit Abstand oder unmittelbar an den Schaft (12) oder eine der Öffnungen (30"), die zentral angeordnet ist, anschließen.

4. Befestiger nach Anspruch 2 oder 3, **dadurch gekennzeichnet, dass** jeweils mindestens eine der Öffnungen (30) in radialem Abstand von einer Mittelachse (19) des Befestigers (10') zwischen zwei in Umfangsrichtung benachbarten Fräsrippen (24) angeordnet ist.

5. Befestiger nach einem der Ansprüche 2 bis 4, **dadurch gekennzeichnet, dass** die Öffnung(en) (30, 30") 20 Prozent der Fläche der Unterseite (18) des Kopfes (14) einnimmt (einnehmen).

6. Befestiger nach einem der vorhergehenden Ansprüche, **dadurch gekennzeichnet, dass** die Drehmitnahme (16) ein sich in den Kopf (14) erstreckendes, im Querschnitt unrundes Loch zur formschlüssigen Aufnahme eines Mitnehmerelements eines Drehantriebswerkzeuges ist.

7. Befestiger nach einem der vorhergehenden Ansprüche, **dadurch gekennzeichnet, dass** die Schneiden in Drehrichtung konkav gekrümmte Fräsrippen (24, 24") sind.

## Claims

1. A fastener comprising a shaft (12) having a disk-shaped head (14) connectable or connected to the shaft (12) in a non-rotating manner and provided with blades altogether respectively extending from the inside to the outside from a connecting point on the shaft (12) on a bottom side (18), and a rotation catch (16) associated with the shaft (12) or the head (14) for setting the fastener (10, 10', 10"), **characterised in that** the blades, as viewed from their connecting point to the outside, are milling ribs (24, 24") inclined or curved away from a radius (R) in the rotational direction during a setting process which transport milling material accumulating during a setting process between the milling ribs (24, 24") to the inside to the centre of the disk-shaped head (14).

2. The fastener according to claim 1, **characterised in that** at least one opening (30, 30") formed like a stud hole extends into the head (14) from the bottom side (18) between the milling ribs (24, 24") to the milling material accommodation.

3. The fastener according to claim 2, **characterised in that** an inner end of each of the milling ribs (24) connects to the shaft (12) or one of the centrally positioned openings (30") on the outside in a distance or directly.

4. The fastener according to claim 2 or 3, **characterised in that** at least one of each of the openings (30) is disposed between two milling ribs (24) positioned adjacent to each other in the circumferential direction in a radial distance to a central axis (19) of the fastener (10').

5. The fastener according to anyone of the claims 2 to 4, **characterised in that** the opening(s) (30, 30") occupy(occupies) 20 percent of the surface area of the bottom side (18) of the head (14).

6. The fastener according to anyone of the preceding claims, **characterised in that** the rotation catch (16) is a hole extending into the head (14) and having a non-round cross section for positively accommodating a driver element of a rotary drive tool.

7. The fastener according to anyone of the preceding claims, **characterised in that** the blades are milling ribs (24, 24") concavely curved in the rotational direction.

## Revendications

1. Dispositif de fixation comprenant une tige (12), avec une tête en forme de disque (14), qui peut être ou est connectée de manière solidaire en rotation à la tige (12) et est pourvue, au niveau d'un côté inférieur (18), de tranchants s'étendant généralement de l'intérieur vers l'extérieur à chaque fois depuis une zone de raccordement à la tige (12), et comprenant un moyen d'entraînement en rotation (16) associé à la tige (12) et/ou à la tête (14) pour enfoncer le dispositif de fixation (10, 10', 10"), **caractérisé en ce que** les tranchants, vus depuis leur zone de raccordement vers l'extérieur, sont des nervures de fraisage (24, 24") courbées ou inclinées d'un rayon R dans le sens de rotation lors d'une opération d'enfoncement, qui transportent le produit de fraisage se formant lors d'une opération d'enfoncement entre les nervures de fraisage (24, 24") vers l'intérieur vers le centre de la tête en forme de disque (14).

2. Dispositif de fixation selon la revendication 1, **caractérisé en ce qu'**au moins une ouverture (30, 30") réalisée en forme de trou borgne s'étend depuis le côté inférieur (18) entre les nervures de fraisage (24, 24") jusqu'au logement de réception du produit de fraisage dans la tête (14).

3. Dispositif de fixation selon la revendication 2, **caractérisé en ce que** les nervures de fraisage (24) se raccordent à chaque fois avec une extrémité intérieure, à l'extérieur à distance de la tige (12) ou directement au niveau de celle-ci ou de l'une des ouvertures (30") qui est disposée centralement.

4. Dispositif de fixation selon la revendication 2 ou 3, **caractérisé en ce qu'**à chaque fois au moins l'une des ouvertures (30) est disposée à distance radiale d'un axe médian (19) du dispositif de fixation (10') entre deux nervures de fraisage (24) adjacentes dans la direction périphérique.

5. Dispositif de fixation selon l'une quelconque des revendications 2 à 4, **caractérisé en ce que** la ou les ouvertures (30, 30") occupent 20 % de la surface du côté inférieur (18) de la tête (14).

6. Dispositif de fixation selon l'une quelconque des revendications précédentes, **caractérisé en ce que** le dispositif d'entraînement en rotation (16) est un trou de section transversale non circulaire s'étendant dans la tête (14), pour recevoir par engagement par correspondance de formes un élément d'entraînement d'un outil d'entraînement en rotation.

7. Dispositif de fixation selon l'une quelconque des revendications précédentes, **caractérisé en ce que** les tranchants sont des nervures de fraisage (24, 24") de courbure concave dans le sens de rotation.
